**Europäisches Patentamt**

**European Patent Office**

**Office européen des brevets**

(19)

(11) Veröffentlichungsnummer: **0 134 383**

**A1**

(12) # EUROPÄISCHE PATENTANMELDUNG

(21) Anmeldenummer: **83890144.5**

(22) Anmeldetag: **05.09.83**

(51) Int. Cl.⁴: **B 23 C 3/06**

(43) Veröffentlichungstag der Anmeldung:
**20.03.85** Patentblatt **85/12**

(84) Benannte Vertragsstaaten:
**AT DE FR GB IT**

(71) Anmelder: **GFM Gesellschaft für Fertigungstechnik und Maschinenbau Gesellschaft m.b.H.**
**Ennserstrasse 14**
**A-4403 Steyr(AT)**

(72) Erfinder: **Blaimschein, Gottfried, Dipl.-Ing.**
**Puchstrasse 2**
**A-4400 Steyr(AT)**

(74) Vertreter: **Hübscher, Gerhard, Dipl.-Ing. et al,**
**Patentanwälte Dipl.-Ing. Gerhard Hübscher Dipl.-Ing.**
**Helmut Hübscher Dipl.-Ing. Heiner Hübscher**
**Spittelwiese 7**
**A-4020 Linz(AT)**

(54) Verfahren zur Bearbeitung von Kurbelwellen od. dgl.

(57) Bei einem Verfahren zur Bearbeitung von Kurbelwellen (3) od. dgl. wird ein scheibenförmiges, umfangsseitig und stirnseitig schneidendes Werkzeug (1), das um eine zur Werkstückachse parallele Achse (A) rotiert, relativ zum Werkstück einem quer zur Rotationsachse (A) gerichteten Vorschub (V) unterworfen. Bei diesem Vorschub, der eine Einstich- und gegebenenfalls eine Umlaufbewegung umfaßt, werden einander gegenüberliegende Stirnflächen (5) und zwischenliegende Zylinderflächen (4) des Werkstückes (3) bearbeitet.

Um mit einem einzigen Werkzeug auch Kurbelwangenseitenflächen (5) und zwischenliegende Zapfen (4) oder ähnliche Stirn- und Zylinderflächen unterschiedlicher Dimensionierung rasch und problemlos bearbeiten zu können, wird der Einstich- und/oder Umlaufbewegung des Werkzeuges (1) eine in Richtung dessen Rotationsachse (A) liegende Schwingbewegung (S) überlagert, deren Amplitude der Differenz zwischen dem Abstand (w) der bearbeiteten Stirnflächen (5) und der wirksamen Werkzeugbreite (b) entspricht und deren Frequenz so auf den Vorschub (V) abgestimmt ist, daß der radiale Vorschubweg (v) während einer vollen Schwingung kleiner bleibt als die radiale Größe (1) des stirnseitigen Werkzeugschneidenbereiches.

./...

Verfahren zur Bearbeitung von Kurbelwellen
od. dgl.

Die Erfindung betrifft ein Verfahren zur
Bearbeitung von Kurbelwellen od. dgl. mit einem
scheibenförmigen, umfangsseitig und stirnseitig
schneidenden Werkzeug, nach dem das um eine zur
Werkstückachse parallele Achse rotierende Werkzeug
relativ zum Werkstück einem quer zur Rotationsachse gerichteten Vorschub unterworfen wird und
bei diesem eine Einstich- und gegebenenfalls eine
Umlaufbewegung umfassenden Vorschub einander gegenüberliegende Stirnflächen und zwischenliegende Zylinderflächen bearbeitet werden.

Ist das Werkzeug für eine Kurbelwellenbearbeitung, beispielsweise ein Fräskopf, in seiner Breite
genau an die Kurbelwangenweite angepaßt, können beim
Einstechen und Umlaufen des Werkzeuges nicht nur die
Rundbearbeitung des Zapfens, sondern gleichzeitig
auch die Seitenbearbeitung der anschließenden Kurbelwangen vorgenommen werden. Erfolgt hingegen die Bearbeitung mit einem gegenüber der Kurbelwangenweite
zu schmalen Werkzeug, sind zwei Einstiche mit anschließendem Rundvorschub für die Zapfenbearbeitung
erforderlich und bei jedem Einstich wird immer nur
eine der beiden Kurbelwangenseitenflächen mitbearbeitet, was vor allem eine beträchtliche Erhöhung der Bearbeitungszeit bedeutet. Viele Kurbelwellen haben aber unterschiedlich lange Hub- und Lagerzapfen und damit unterschiedliche Wangenweiten, so daß zur Bearbeitung dieser Kurbelwellen auch bisher zwei verschiedene, an die Lagerzapfen bzw. an die Hubzapfen angepaßte Werkzeuge vorhanden sein müssen, wenn die zeitraubende Arbeitsweise des zweimaligen Einstechens für die Bearbeitung der längeren Zapfen samt den anschließenden Schulter- und Kurbelwangenseitenflächen vermieden werden soll. Diese Forderung nach dem Einsatz zweier oder gar mehrerer Werkzeuge verlangt dann auch für die Bearbeitung solcher Kurbelwellen oder anderer Werkstücke mit verschieden langen Zylinderflächen und anschließenden Stirnflächen kostspielige Zwei- oder Mehrschlittenmaschinen, auf denen alle Querschnitte und Stirnflächen bearbeitet werden können, oder eine entsprechende Anzahl von Einschlittenmaschinen mit jeweils nur einer ganz bestimmten Bearbeitungsmöglichkeit und der Notwendigkeit des Werkstückumspannens.

Der Erfindung liegt daher die Aufgabe zugrunde, diese Mängel zu beseitigen und ein Verfahren der eingangs geschilderten Art anzugeben, nach dem mit nur einem Werkzeug auch Kurbelwangenseitenflächen und zwischenliegende Zapfen oder ähnliche Stirn- und Zylinderflächen unterschiedlicher Dimensionierung rasch und problemlos bearbeitet werden können.

Die Erfindung löst diese Aufgabe dadurch, daß der Einstich- und/oder Umlaufbewegung des Werkzeuges eine in Richtung dessen Rotationsachse liegende Schwingbewegung überlagert wird, deren Amplitude der Differenz zwischen dem gewünschten Abstand der bearbeiteten Stirnflächen und der wirksamen Werk-

0134383

zeugbreite entspricht. Wird erfindungsgemäß noch die Frequenz der Schwingbewegung so auf den Vorschub abgestimmt, daß der radiale Vorschubweg während einer vollen Schwingung kleiner bleibt als die radiale Größe des stirnseitigen Werkzeugschneidenbereiches, werden zudem hohe Bearbeitungsgenauigkeiten erreihbar.

Auf Grund der Schwingbewegung kann das Werkzeug im Zuge des Vorschubes auch zueinander parallele Stirnflächen mit einem gegenüber der Werkzeugbreite größeren Abstand bearbeiten, da die stirnseitig wirksamen Schneiden des Werkzeuges jeweils in den Scheitelbereichen der Schwingbewegung einmal die eine Stirnfläche und dann die andere Stirnfläche bearbeiten, wobei durch die gegenseitige Abhängigkeit von Vorschub und Schwingung dennoch eine durchgehende Bearbeitung jeder der beiden Stirnflächen erfolgt. Der durch das von einer Stirnfläche wegschwingende Werkzeug gegenüber der ordnungsgemäßen Bearbeitungsfläche verbleibende Materialüberstand wird nämlich beim Zurückschwingen des Werkzeuges sozusagen nachträglich wieder abgearbeitet, so daß bei Erreichen des nächstfolgenden, dieser Stirnfläche zugehörigen Scheitelpunktes der Werkzeugschwingbewegung die Stirnfläche bis zu diesem Scheitelpunkt bearbeitet ist. Wird der Abstand dieser beiden Scheitelpunkte, der ja von der Frequenz der Schwingbewegung und von der Radialgeschwindigkeit des Vorschubes abhängig ist, kleiner gehalten als die radiale Erstreckung des stirnseitigen Schneidbereiches des Werkzeuges kommt es zu einer hohen Bearbeitungsgüte und bei Verwendung von zur Werkzeugrotationsachse normalen Schneidflächen an den Werkzeugstirnseiten entstehen beispielsweise trotz einer gegenüber der Werkzeugbreite größeren Kurbelwangenweite während eines einzigen Einstiches bzw. Umlaufes für beide Kurbelwangen vollkommen eben bearbeitete Kurbelwangenseitenflächen. Mit ein und demselben Werkzeug können daher jeweils Kurbelwangenseitenflächen und zugehörige Zapfen od. dgl. auch unterschiedlicher axialer Abstände und Längen praktisch innerhalb gleichbleibender Zeitspannen und mit gleichbleibender Qualität bearbeitet werden, genauso wie es nun möglich ist, in beliebige Werkstücke überbreite Nuten, Ausnehmungen u. dgl. einzuarbeiten, wobei je nach Bearbeitungsform der Vorschub auch auf eine reine Einstichbewegung beschränkt sein kann oder die Schwingbewegung nur während des Einstiches bzw. des Umlaufes aufzubringen ist. Die dem Vorschub überlagerte Schwingbewegung läßt sich außerdem bei den profilgebenden Werkzeugen zur Beeinflussung der Bearbeitungstoleranzen und auch zur Berücksichtigung von Abnützungserscheinungen der Werkzeugschneiden usw. heranziehen.

Um Stirnflächen entlang des gesamten Umfangsbereiches sauber bearbeiten zu können, wird die Schwingbewegung des Werkzeuges nach dem Einstechen meist auch beim Werkzeugumlauf aufrecht erhalten, wobei dann die Torusflächen im Übergangsbereich zwischen Stirn- und Zylinderflächen Abweichungen zeigen, was aber keine Rolle spielt, da diese Übergangsbereiche ohnehin einer Nachbearbeitung, beispielsweise durch Schleifen oder Hinterdrehen unterworfen werden.

Es ist zwar bereits bekannt, umfangsseitig schneidenden Werkzeugen zur Bearbeitung gegenüber der Werkzeugbreite längerer Wellenabschnitte einen Axialvorschub zu erteilen, doch erfolgt dieser Axialvorschub erst nach dem vollen Einstechen gleichzeitig mit dem Rundvorschub, was eine Stirnflächenbearbeitung im Sinne der Erfindung ausschließt. Auch gibt es schon Stirnfräser, denen zusätzlich zum Vorschub eine oszillierende Bewegung aufgezwungen wird, um mit diesen Stirnfräsern Rundprofile bearbeiten zu können. Die oszillierende Bewegung ist dazu quer zur Rotationsachse des Fräsers gerichtet und soll die Qualität des erreichbaren Rundquerschnittes verbessern, keinesfalls dient sie aber zur Bearbeitung von Stirnflächen im Zuge des Vorschubes für diese Rundbearbeitung.

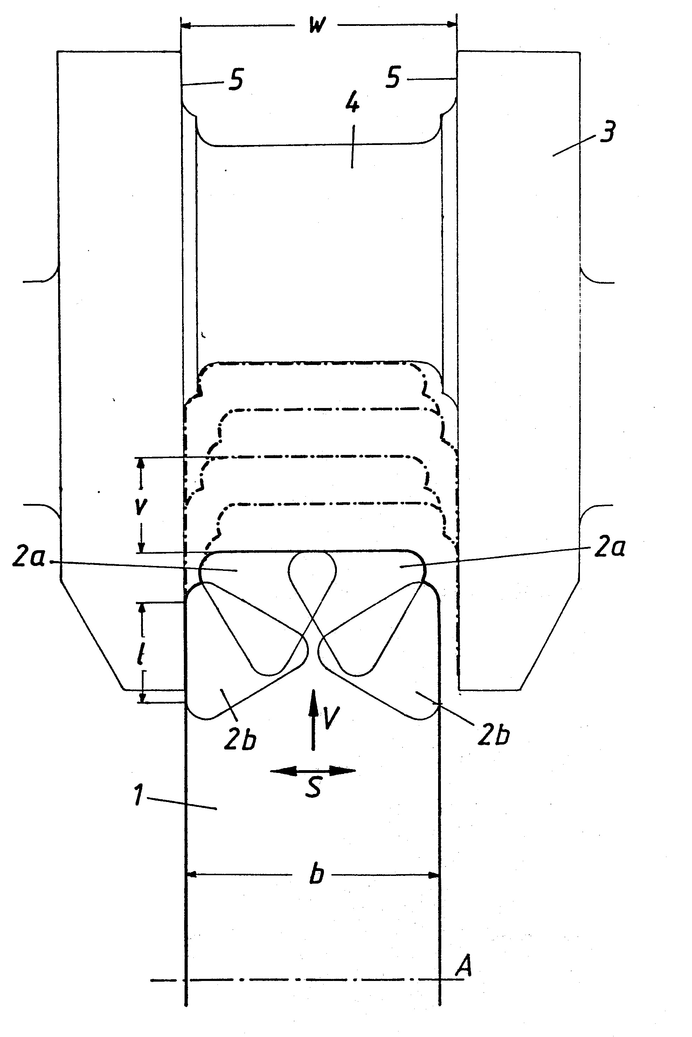

Das erfindungsgemäße Verfahren wird in der Zeichnung an Hand eines Bearbeitungsschemas veranschaulicht.

Zur spanabhebenden Bearbeitung einer Kurbelwelle wird ein scheibenförmiges, umfangsseitig und stirnseitig schneidendes Werkzeug 1, beispielsweise ein Innen- oder Außenfräser mit entsprechend der zu bearbeitenden Profilform am Umfang und an den Stirnseiten angeordneten Messerplättchen 2a, 2b, eingesetzt, das um eine zur Längsachse der Kurbelwelle 3 parallele Rotationsachse A rotiert. Diesem Werkzeug 1 wird ein quer zur Rotationsachse A gerichteter, sich aus einer Einstich- und einer Umlaufbewegung zusammensetzender Vorschub erteilt. Das Werkzeug 1 ist in seiner Profilierung und in seiner wirksamen Breite b auf die Bearbeitung der nicht näher dargestellten Lagerzapfen der Kurbelwelle 3 abgestimmt, so daß nach einem einmaligen Einstechen und einem darauffolgenden Umlaufen des Werkzeuges 1 die Lagerzapfen mit den anschließenden Schultern und Stirnflächen bearbeitet sind.

Um nun dieses Werkzeug 1 auch für die Bearbeitung der gegenüber den Lagerzapfen etwas verlängerten Hubzapfen 4 samt den anschließenden Kurbelwangenseitenflächen 5 verwenden zu können und
dabei vor allem trotz des gegenüber der wirksamen
Werkzeugbreite b zu großen Abstandes w zwischen
den beiden Kurbelwangenseitenflächen 5 diese gemeinsam während des Einstechens und Umlaufens
sauber und exakt bearbeiten zu können, wird der
Vorschubbewegung V des Werkzeuges 1 eine in Richtung der Rotationsachse A liegende Schwingbewegung
S überlagert. Die Amplitude dieser Schwingbewegung
S gleicht der Differenz zwischen dem gewünschten Abstand w der beiden Kurbelwangenseitenflächen 5 und
der wirksamen Werkzeugbreite b und die Frequenz
wird so mit der Vorschubbewegung gekoppelt, daß der
radiale Vorschubweg v während einer vollen Schwingung stets unter der radialen Größe des stirnseitigen Werkzeugschneidenbereiches, im dargestellten
Beispiel der Schneidkantenlänge 1 der stirnseitigen
Schneidplättchen 2b bleibt. Werden diese Voraussetzungen erfüllt, bearbeitet das Werkzeug 1 mit seinen
stirnseitigen Messerplättchen 2b beide Kurbelwangenseitenflächen 5, und zwar wird im Bereich des einen
Scheitelpunktes der Schwingbewegung S die eine Kurbelwangenseitenfläche und im Bereich des anderen
Scheitelpunktes die andere Kurbelwangenseitenfläche
bearbeitet (siehe strichpunktierte Werkzeugdarstellungen), wobei der Hauptanteil der Bearbeitung bereits beim Einstechen und nur der verbleibende
Restanteil beim anschließenden Umlauf erfolgt. Da
an beiden Kurbelwangenseitenflächen 5 jeweils hintereinandergereihte Scheitelpunkte der Werkzeugschwingbewegung innerhalb des stirnseitigen Schneidbereiches
des Werkzeuges liegen, werden die an und für sich durch die Schwingbewegung des Werkzeuges 1 zwischen diesen Scheitelpunkten entstehenden Unebenheiten vom Werkzeug auf seinem Weg zum jeweils folgenden neuen Scheitelpunkt radial fortschreitend beseitigt, so daß am Ende der Einstich- und Umlaufbewegung beide Kurbelwangenseitenflächen 5 sauber entsprechend den stirnseitigen Schnittflächen des Werkzeuges 1 bearbeitet sind.

Durch das erfindungsgemäße Verfahren ist es daher möglich, Kurbelwangenseitenflächen oder andere einander gegenüberliegende Stirnflächen unabhängig von der wirksamen Werkzeugbreite b zeitsparend und rationell im Verlaufe eines einmaligen Einstich- und Umlaufvorganges zu bearbeiten.

P a t e n t a n s p r ü c h e :

1. Verfahren zur Bearbeitung von Kurbelwellen (3) od. dgl. mit einem scheibenförmigen, umfangsseitig und stirnseitig schneidenden Werkzeug (1), nach dem das um eine zur Werkstückachse parallele Achse (A) rotierende Werkzeug (1) relativ zum Werkstück einem quer zur Rotationsachse (A) gerichteten Vorschub (V) unterworfen wird und bei diesem eine Einstich- und gegebenenfalls eine Umlaufbewegung umfassenden Vorschub (V) einander gegenüberliegende Stirnflächen (5) und zwischenliegende Zylinderflächen (4) bearbeitet werden, dadurch gekennzeichnet, daß der Einstich- und/oder Umlaufbewegung des Werkzeuges (1) eine in Richtung dessen Rotationsachse (A) liegende Schwingbewegung (S) überlagert wird, deren Amplitude der Differenz zwischen dem gewünschten Abstand (w) der bearbeiteten Stirnflächen (5) und der wirksamen Werkzeugbreite (b) entspricht.

2. Verfahren nach Anspruch 1, dadurch gekennzeichnet, daß die Frequenz der Schwingbewegung (S) so auf den Vorschub (V) abgestimmt wird, daß der radiale Vorschubweg (v) während einer vollen Schwingung kleiner bleibt als die radiale Größe (1) des stirnseitigen Werkzeugschneidenbereiches.

0134383

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | FR-A-2 250 303  (MANUFACTURE) <br> * Seite 2, Zeile 38 – Seite 4, Zeile 33; Figuren *. <br><br> --- | 1 | B 23 C    3/06 |
| A | DE-C-  212 041  (BERLINER) <br><br> --- | 1 | |
| A | FR-A-1 559 665  (SKODA) <br><br> --- | 1 | |
| A | GB-A-1 131 109  (SUNDSTRAND) <br><br> ----- | 1 | |

RECHERCHIERTE
SACHGEBIETE (Int. Cl. 3)

B 23 C    3/00
B 24 B    5/00

Der vorliegende Recherchenbericht wurde für alle Patentansprüche erstellt.

| Recherchenort | Abschlußdatum der Recherche | Prüfer |
|---|---|---|
| DEN HAAG | 03-07-1984 | HORVATH R.C. |